(19) **Europäisches Patentamt / European Patent Office / Office européen des brevets**

(11) **EP 4 388 284 B1**

(12) **FASCICULE DE BREVET EUROPEEN**

(45) Date de publication et mention de la délivrance du brevet:
**19.03.2025 Bulletin 2025/12**

(21) Numéro de dépôt: **22750724.1**

(22) Date de dépôt: **27.07.2022**

(51) Classification Internationale des Brevets (IPC):
**G01F 23/16** (2006.01)     **G01F 22/02** (2006.01)
**G01F 23/00** (2022.01)     **F01M 11/12** (2006.01)

(52) Classification Coopérative des Brevets (CPC):
**G01F 23/162; F01M 11/12; G01F 22/02; G01F 23/0007**

(86) Numéro de dépôt international:
**PCT/EP2022/071023**

(87) Numéro de publication internationale:
**WO 2023/020797 (23.02.2023 Gazette 2023/08)**

(54) **ENSEMBLE D'UN RÉSERVOIR ET D'UN CAPTEUR DE DÉTERMINATION D'UN NIVEAU DE LIQUIDE POUR UN RÉSERVOIR D'AÉRONEF, PROCÉDÉ D'UTILISATION D'UN TEL CAPTEUR**

TANK- UND SENSORANORDNUNG ZUR BESTIMMUNG EINES FLÜSSIGKEITSSTANDS FÜR EINEN FLUGZEUGTANK, VERFAHREN ZUR VERWENDUNG SOLCH EINES SENSORS

ASSEMBLY OF TANK-AND-SENSOR FOR DETERMINING A LIQUID LEVEL FOR AN AIRCRAFT TANK, METHOD FOR USING SUCH A SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.08.2021 FR 2108730**

(43) Date de publication de la demande:
**26.06.2024 Bulletin 2024/26**

(73) Titulaire: **Safran Helicopter Engines**
**64510 Bordes (FR)**

(72) Inventeurs:
• **MOUTAUX, Antoine Pascal**
  **77550 Moissy-Cramayel (FR)**
• **ROBERT, Olivier**
  **77550 Moissy-Cramayel (FR)**

(74) Mandataire: **Argyma**
**14 Boulevard de Strasbourg**
**31000 Toulouse (FR)**

(56) Documents cités:
**EP-A1- 2 700 913     DE-A1- 3 928 679**
**FR-A1- 3 086 699     US-B1- 6 425 293**
**US-B1- 6 434 494**

EP 4 388 284 B1

## Description

### DOMAINE TECHNIQUE

La présente invention concerne le domaine de la mesure d'un niveau de liquide dans un réservoir d'un aéronef, en particulier, un réservoir d'huile d'un hélicoptère.

Il est connu d'utiliser un capteur de niveau immergé dans un réservoir d'un aéronef pour mesurer un niveau de liquide, par exemple, par mesure de la position d'un flotteur du capteur de niveau dans le réservoir. Un capteur de niveau immergé nécessite de s'adapter à la forme du réservoir, ce qui est un inconvénient important étant donné que les réservoirs sont généralement de formes différentes en fonction des aéronefs. De plus, un capteur de niveau immergé présente l'inconvénient d'être difficilement accessible, ce qui pénalise la maintenance.

De manière connue, un réservoir comporte une phase liquide, dont le niveau est variable, et une phase gazeuse complémentaire. Il a été proposé d'utiliser un capteur de niveau de type différentiel afin de déterminer le niveau de liquide dans un réservoir en mesurant, d'une part, la pression de la phase liquide et, d'autre part, la pression de la phase gazeuse.

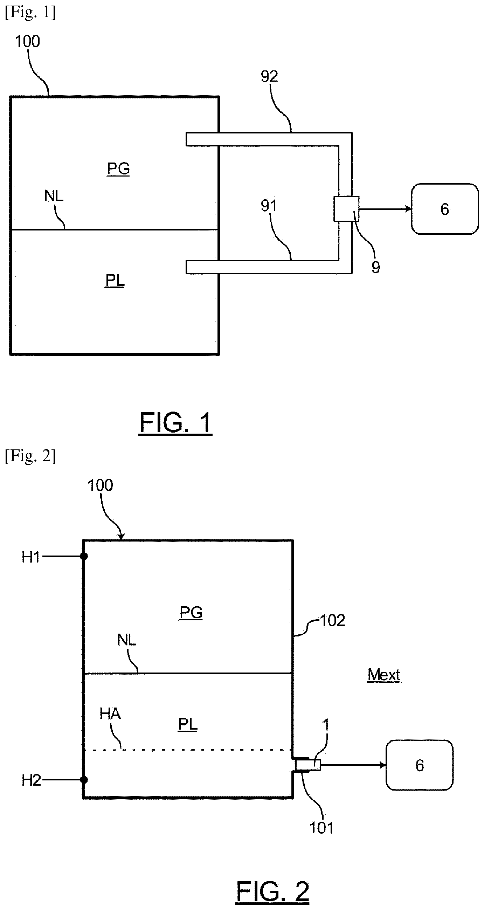

En pratique, en référence à la figure 1, un capteur de niveau de type différentiel 9 comporte un premier tubage 91 en relation avec la phase liquide PL et un deuxième tubage 92 en relation avec la phase gazeuse PG d'un réservoir 100. Le capteur de niveau 9 détermine à partir de la différence de pression un niveau de liquide NL qui est transmis à un calculateur 6 de l'aéronef afin de fournir une information de niveau de liquide au système de propulsion de l'aéronef ou au pilote.

De tels tubages 91, 92 s'étendent extérieurement au réservoir 91, 92, ce qui augmente l'encombrement. De plus, il est nécessaire de prévoir des ouvertures dédiées dans le réservoir 100 afin de permettre le passage des tubages 91, 92, ce qui complique la fabrication du réservoir 100. Ces problématiques sont d'autant plus importantes que chaque réservoir 100 comporte plusieurs capteurs de niveau différentiel 9 afin d'assurer une consolidation de la mesure de niveau et limiter les erreurs, en particulier, liées aux mouvements de l'aéronef. Lors de la maintenance, il est nécessaire de retirer les tubages 91, 92, ce qui est complexe et chronophage.

L'invention vise ainsi à éliminer au moins certains de ces inconvénients en proposant un capteur de détermination du niveau de liquide qui s'adapte à tout réservoir, dont la maintenance est simplifiée tout en ayant un encombrement limité.

On connaît dans l'art antérieur par la demande de brevet EP2700913A1 un système de mesure de la quantité de carburant dans un réservoir d'aéronef.

### PRESENTATION DE L'INVENTION

L'invention concerne un ensemble selon la revendication 1.

Grâce à l'invention, on propose avantageusement un capteur en deux parties permettant d'obturer l'orifice de manière pratique pour éviter toute perte de liquide et/ou pollution. De plus, un montage amovible permet une maintenance simple et rapide de l'organe de mesure. Celui-ci peut ainsi être inspecté et/ou remplacé sans difficulté.

Selon un aspect de l'invention, le dispositif de mesure comporte une conduite extérieure débouchant à l'extérieur du réservoir pour mesurer la pression extérieure comme pression de référence. Ainsi, le dispositif de mesure permet d'utiliser la pression extérieure comme pression de référence. Cela permet de former un capteur d'encombrement réduit. Il n'est ainsi pas nécessaire de prévoir une ouverture haute dans le réservoir.

Selon un autre aspect de l'invention, le dispositif de mesure comporte une conduite gazeuse configurée pour être en communication fluidique avec une phase gazeuse du réservoir comme pression de référence. De manière préférée, la conduite gazeuse est reliée à un bouchon de remplissage du réservoir, ce qui permet d'éviter de former un orifice dédié dans le réservoir. Selon un exemple ne faisant pas partie de l'invention telle que revendiquée, la conduite gazeuse est flexible de manière à permettre une manipulation pratique du bouchon de remplissage avec la conduite gazeuse.

De manière préférée, le dispositif de mesure comprend deux organes de mesure de pression afin d'assurer une redondance et/ou une consolidation de la mesure de niveau de liquide.

De préférence, l'ensemble comprend un unique capteur.

De préférence, le réservoir ayant une hauteur minimale de liquide désignée « hauteur d'alerte », l'orifice est positionné à une hauteur inférieure à ladite hauteur d'alerte. Ainsi, la conduite de liquide est toujours remplie de liquide pour fournir une pression de liquide.

De manière préférée, l'orifice est un orifice de vidange du réservoir dans lequel est monté un bouchon de vidange, le capteur est intégré audit bouchon de vidange.

Une mesure au niveau du bouchon de vidange est très avantageuse étant donné que le dispositif de fermeture remplit une fonction d'obturation sans nécessiter de réaliser un usinage dédié dans le réservoir. **En** outre, la position du bouchon de vidange en position très basse garantit que la conduite de liquide sera toujours remplie de liquide pour fournir une pression de liquide. Une intégration du capteur dans le bouchon de vidange permet d'appliquer l'invention à des réservoirs d'aéronef en circulation (rétrocompatibilité), ce qui est très avantageux.

Le réservoir comprend une embouchure formée autour de l'orifice, l'embouchure comportant au moins une ouverture, en communication fluidique avec une phase gazeuse du réservoir via une première portion de conduite gazeuse interne, le dispositif de fermeture comportant une deuxième portion de conduite gazeuse interne configurée pour alimenter l'organe de mesure avec la pression gazeuse.

Une conduite gazeuse interne permet de réduire de manière importante l'encombrement, le dispositif de fermeture permettant de fournir au dispositif de mesure une pression de liquide et une pression gazeuse. L'encombrement est réduit ainsi que la masse. De préférence, l'organe d'obturation automatique de la conduite de liquide permet d'obturer la conduite de liquide et la deuxième portion de conduite gazeuse interne lorsque le dispositif de mesure n'est pas monté sur le dispositif de fermeture.

De manière préférée, l'ensemble comprend au moins un capteur de pression auxiliaire configuré pour mesurer une pression liquide à une hauteur déterminée de l'orifice de manière à en déduire une densité de liquide. En connaissant la densité, on peut en déduire le type de liquide pour déterminer un paramètre de correction du niveau de liquide. Ainsi, le niveau de liquide fourni au pilote est très précis.

L'invention concerne en outre un aéronef comportant un capteur tel que présenté précédemment et/ou un ensemble d'un réservoir d'aéronef et d'un capteur tel que présenté précédemment.

L'invention concerne également un procédé d'utilisation d'un capteur monté dans un réservoir d'aéronef, le dispositif de fermeture du capteur étant monté dans l'orifice du réservoir, l'organe d'obturation obturant la conduite de liquide, le procédé comportant des étapes consistant à :

• Monter le dispositif de mesure sur le dispositif de fermeture de manière à mettre en communication fluidique l'organe de mesure avec la pression de liquide, l'organe d'obturation étant inactivé suite au montage,
• Mesurer une différence de pression entre, d'une part, la pression de liquide dans la conduite de liquide et, d'autre part, une pression de référence de manière à en déduire le niveau de liquide dans le réservoir.

De préférence, le procédé comprend une étape d'émission d'une alarme lorsque la pression de liquide est égale à la pression de référence. Ainsi, dans des conditions extrêmes (descente/montée rapide), il est indiqué à l'opérateur que la mesure de niveau n'est pas fiable. Il peut ainsi piloter en tenant compte uniquement des autres mesures pertinentes.

## PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.

La figure 1 est une représentation schématique d'un réservoir avec un capteur de mesure différentiel selon l'art antérieur.

La [Fig.2] est une représentation schématique d'un réservoir avec un capteur selon une première forme de réalisation ne faisant pas partie de l'invention telle que revendiquée.

La [Fig.3] est une représentation schématique rapproché du capteur de la [Fig.2].

La [Fig.4] est une représentation schématique d'un réservoir avec un capteur selon une deuxième forme de réalisation ne faisant pas partie de l'invention telle que revendiquée.

La [Fig.5] est une représentation schématique d'un réservoir avec un capteur selon une forme de réalisation de l'invention.

La [Fig.6], la [Fig.7] et la [Fig.8] sont des représentations schématiques d'intégration de deux organes de mesure dans un capteur.

La [Fig.9] est une représentation schématique d'utilisation d'un capteur auxiliaire pour déterminer la densité de liquide.

Il faut noter que les figures exposent l'invention de manière détaillée pour mettre en œuvre l'invention, lesdites figures pouvant bien entendu servir à mieux définir l'invention le cas échéant.

## DESCRIPTION DETAILLEE DE L'INVENTION

L'invention va être présentée pour un réservoir d'huile d'un hélicoptère mais il va de soi que l'invention s'applique à d'autres types de réservoir (carburant, liquide de refroidissement, etc.) et à d'autres types d'aéronef (avion, etc.).

En référence à la [Fig.2], il est représenté de manière schématique un réservoir 100 d'un hélicoptère. Le réservoir 100 est représenté sous la forme d'un pavé mais celle-ci est généralement complexe avec un fond non plat. Le réservoir 100 comporte une phase liquide PL, dont le niveau est variable, et une phase gazeuse complémentaire PG. L'interface entre les deux phases PL, PG correspond au niveau de liquide NL à déterminer.

Dans cet exemple, le réservoir 100 possède une paroi 102 ayant une épaisseur permettant de résister à la pression, généralement métallique. Le réservoir 100 compte au moins une entrée de liquide H1 et une sortie de liquide H2 afin d'alimenter un circuit de liquide, en particulier, un circuit d'huile pour refroidir des composants d'une turbomachine d'aéronef.

Dans cet exemple ne faisant pas partie de l'invention telle que revendiquée, le réservoir 100 comporte un orifice de vidange 101 qui est positionné dans un point bas du réservoir 100 de manière à permettre sa vidange par gravité. Un tel orifice de vidange 101 est formé lors de la fabrication d'un réservoir 100 et ne nécessite avantageusement pas d'usinage supplémentaire.

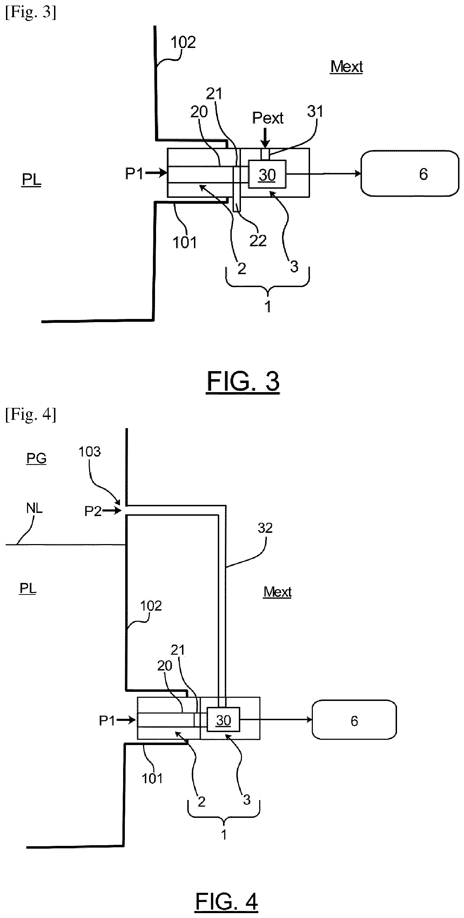

Comme illustré à la [Fig.3], l'orifice de vidange 101 comporte une embouchure, de préférence cylindrique, pour coopérer avec un bouchon de vidange venant fermer ledit orifice de vidange 101. Dans cet exemple, un capteur 1 de détermination d'un niveau de liquide NL est intégré audit bouchon de vidange afin que ce dernier remplisse avantageusement une double fonction et limite l'encombrement.

Il va néanmoins de soi que le capteur 1 pourrait être utilisé de manière indépendante, en particulier, dans un orifice de circulation de fluide autre que l'orifice de vidange 101.

De manière préférée, le capteur 1 est positionné à une hauteur inférieure à une hauteur minimale de liquide désignée « hauteur d'alerte » HA. Ainsi, le capteur 1 est toujours immergé et soumis à la pression de liquide comme cela sera présenté par la suite. L'orifice de vidange 101 possède une très faible hauteur et respecte cette condition. De manière préférée, le capteur 1 est situé dans une position peu sujette aux remous dus à l'aspiration et au refoulement de liquide (proximité de l'entrée de liquide H1 et de la sortie de liquide H2). L'orifice de vidange 101 est généralement situé de manière opposée et respecte cette condition.

Lors du démarrage d'une turbomachine de l'aéronef, une certaine quantité d'huile est prélevée pour remplir les canalisations de la turbomachine (phénomène de « gulping »). De manière avantageuse, la hauteur d'alerte HA tient compte de ce phénomène.

Capteur de détermination d'un niveau de liquide

En référence à la [Fig.3], le capteur 1 comprend un dispositif de fermeture 2, configuré pour être monté dans l'orifice de vidange 101, et un dispositif de mesure 3, monté de manière amovible sur le dispositif de fermeture 2. Autrement dit, le dispositif de mesure 3 forme un accessoire amovible qui n'est pas nécessaire pour fermer le réservoir 100. Du fait de son caractère amovible, la maintenance du dispositif de mesure 3 est grandement simplifiée.

Le dispositif de fermeture 2 comprend une conduite de liquide 20 configurée pour conduire du liquide issu de l'orifice de vidange 101 et un organe d'obturation automatique 21 de la conduite de liquide 20 si le dispositif de mesure 3 n'est pas monté sur le dispositif de fermeture 2. Comme cela sera présenté par la suite, la coopération du dispositif de mesure 3 avec le dispositif de fermeture 2 permet d'inactiver l'organe d'obturation automatique 21 et permet une circulation de liquide permettant de mesurer la pression de liquide P2. L'organe d'obturation automatique 21 peut se présenter sous diverses formes, en particulier, un clapet anti-retour.

Ainsi, le dispositif de fermeture 2 remplit avantageusement une fonction de bouchon en venant boucher l'orifice de vidange 101. Le dispositif de mesure 3 permet de mesurer le niveau de liquide NL et peut être remplacé de manière rapide en cas de dysfonctionnement. Cette solution est avantageuse étant donné qu'elle est transposable à tout réservoir existant 100. De plus, en cas de maintenance ou d'évolution technologique du dispositif de mesure 3, celui-ci peut être remplacé de manière pratique.

De manière préférée, le dispositif de fermeture 2 et le dispositif de mesure 3 sont montés ensemble de manière mécanique, par exemple, par vissage, par emboitement, par un système à baïonnette ou autre. Il va de soi qu'un montage magnétique pourrait également convenir.

Selon un aspect de l'invention, pour permettre la vidange, un tuyau est inséré depuis l'extérieur dans l'organe d'obturation automatique 21 afin de l'inactiver et permettre au liquide de s'écouler. De manière alternative, en référence à la [Fig.3], le dispositif de fermeture 2 pourrait comprendre une manette de commande 22 configurée pour inactiver l'organe d'obturation automatique 21 et permettre une vidange du réservoir 100.

Selon l'invention, le dispositif de mesure 3 comprend au moins un organe de mesure de pression 30 configuré pour mesurer une différence de pression entre, d'une part, la pression de liquide P1 dans la conduite de liquide 20 et, d'autre part, une pression de référence de manière à en déduire le niveau de liquide NL dans le réservoir 100. Comme cela sera présenté par la suite, la pression de référence peut être de différente nature.

L'organe de mesure 30 est relié à un calculateur 6 de l'aéronef afin de fournir une information de niveau de liquide au système de propulsion de l'aéronef ou au pilote.

De préférence, l'organe de mesure de pression 30 se présente sous la forme d'une puce électronique configurée pour déterminer une différence de pression entre la pression de liquide P1 et la pression de référence.

Dans cet exemple ne faisant pas partie de l'invention telle que revendiquée, en référence à la [Fig.3], le dispositif de mesure 3 comporte un unique organe de mesure de pression 30. Le dispositif de mesure 3 comporte une conduite extérieure 31, débouchant à l'extérieur du réservoir 100. Autrement dit, la pression de référence est la pression extérieure Pext du milieu extérieur Mext, c'est-à-dire, la pression atmosphérique. La pression atmosphérique Pext forme une pression de référence stable qui permet de déterminer précisément le niveau de liquide NL de manière différentielle.

Ainsi, l'intégration d'un capteur 1 dans un bouchon de vidange permet de mesurer le niveau de liquide NL sans modifier le réservoir 100, ce qui est avantageux. L'encombrement est par ailleurs limité.

Selon un exemple ne faisant pas partie de l'invention telle que revendiquée, en référence à la [Fig.4], le dispositif de mesure 3 comporte une conduite gazeuse 32 en communication fluidique avec la phase gazeuse PG du réservoir 100. Autrement dit, la pression de référence Pref est la pression gazeuse P2, c'est-à-dire, la pression de la phase gazeuse PG. En référence à la [Fig.4], la conduite gazeuse 32 s'étend extérieurement au réservoir 100 et relie l'organe de mesure 30 à une ouverture haute 103 formée dans le réservoir 100. La conduite gazeuse 32 peut être flexible ou rigide. De manière préférée, la conduite gazeuse 32 est équipée de raccords pneumatiques à ses extrémités.

Selon cet exemple, la conduite gazeuse 32 débouche dans un bouchon de remplissage (non représenté) monté dans un orifice de remplissage situé en partie haute du réservoir 100. L'utilisation d'une conduite gazeuse 32 qui est flexible permet d'éviter son démontage lorsque le réservoir 100 est rempli. Le bouchon de remplissage peut ainsi être manipulé tout en restant connecté à la conduite gazeuse 32. La phase gazeuse PG permet de former une base de comparaison pertinente pour déterminer le niveau de liquide NL.

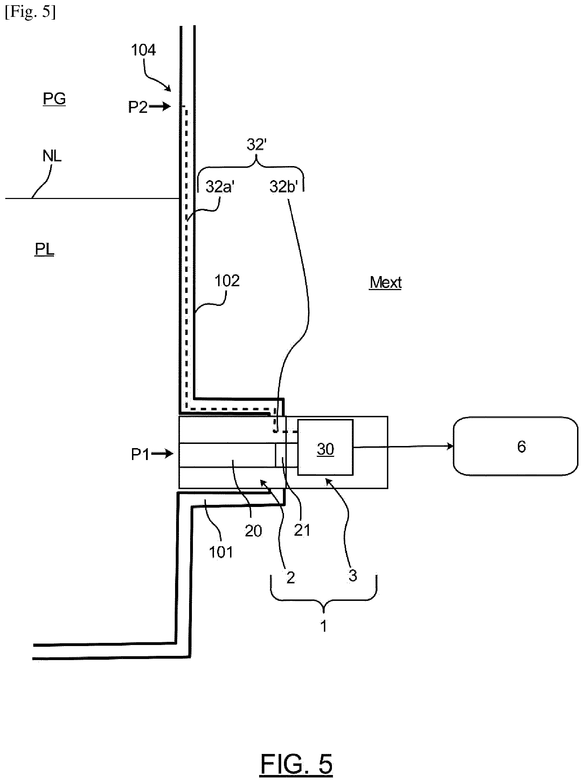

Selon l'invention, en référence à la [Fig.5], la conduite gazeuse 32' s'étend intérieurement au réservoir 100 et au dispositif de fermeture 2 et permet de relier un orifice haut 104 (piquage) débouchant à l'intérieur du réservoir 100 et l'organe de mesure 30 du dispositif de mesure 3. La conduite gazeuse interne 32' comporte une première portion 32a' qui est formée dans l'épaisseur de la paroi 102 du réservoir 100 et une deuxième portion 32b' qui est formée dans le dispositif de fermeture 2. De manière préférée, l'embouchure 101 du réservoir 100 comporte une ouverture qui permet la communication fluidique entre les deux portions 32a', 32b'. De manière préférée, des joints sont prévus pour assurer l'étanchéité, en particulier, des joints toriques.

Autrement dit, le dispositif de fermeture 2 permet de fournir une pression liquide P1 et une pression gazeuse P2 de manière centralisée et pratique au dispositif de mesure 3. L'organe de mesure 30 permet ainsi d'en déduire le niveau de liquide NL.

De manière préférée, la première portion 32a' de la canalisation gazeuse 32' s'étend vers le haut depuis l'orifice haut 104 et vers le bas depuis l'ouverture qui permet la communication fluidique entre les deux portions 32a', 32b, pour éviter tout phénomène d'accumulation de brouillard liquide dans la canalisation gazeuse 32', qui viendrait fausser la mesure.

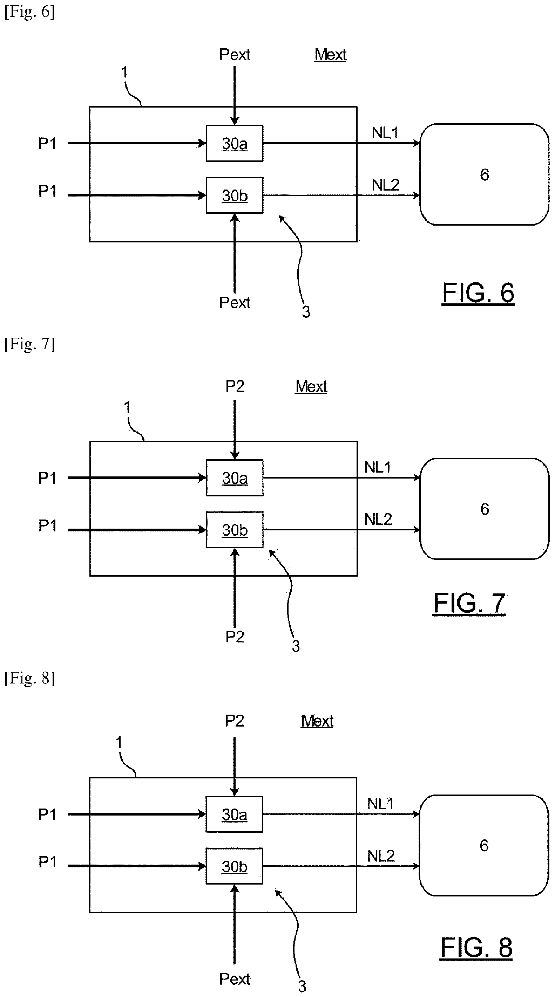

Selon un aspect préféré, en référence aux figures 6 à 8, le dispositif de mesure 3 du capteur 1 comprend deux organes de mesure 30a, 30b afin de réaliser des mesures indépendantes de niveau NL1, NL2 qui sont fournies au calculateur 6. Cela permet de manière avantageuse de détecter de manière précoce tout défaut d'un des organes de mesure 30a, 30b. De manière avantageuse, les organes de mesure 30a, 30b sont intégrés à un même capteur 1 pour réduire l'encombrement et le nombre d'usinages dans le réservoir 100. De manière préférée, chaque réservoir 100 n'est associé qu'à un seul capteur 1, celui-ci pouvant comprendre un ou plusieurs organes de mesure 30a, 30b. Du fait de la redondance, il n'est plus nécessaire de prévoir une fenêtre dans le réservoir 100 afin de permettre un contrôle visuel du niveau de liquide NL.

Comme illustré à la [Fig.6], les deux organes de mesure 30a, 30b permettent de mesurer chacun une pression de fluide P1 et une pression extérieure Pext. Dans cet exemple, les deux organes de mesure 30a, 30b sont alimentés de manière distincte afin de garantir l'indépendance des mesures. Néanmoins, il va de soi que la communication avec la phase liquide PL ou le milieu extérieur Mext pourrait être commune afin de limiter l'encombrement.

En référence à la [Fig.7], les deux organes de mesure 30a, 30b permettent de mesurer chacun une pression de fluide P1 et une pression gazeuse P2. Dans cet exemple, les deux organes de mesure 30a, 30b sont alimentés de manière distincte afin de garantir l'indépendance des mesures. Néanmoins, il va de soi que la communication avec la phase liquide PL ou la phase gazeuse PG pourrait être commune afin de limiter l'encombrement.

En référence à la [Fig.8], le premier organe de mesure 30a permet de mesurer une pression de fluide P1 et une pression gazeuse P2 tandis que le deuxième organe de mesure 30b permet de mesurer une pression de fluide P1 et une pression extérieure Pext. L'utilisation de deux pressions de référence de natures différentes permet d'obtenir deux mesures de niveau NL1, NL2 qui sont indépendantes et décorrélées. Cela permet de détecter une dérive d'un des organes de mesure 30a, 30b ou un autre défaut de manière pratique. En effet, lorsque la turbomachine est arrêtée, les pressions P2 et Pext doivent être identiques et conduire à la même mesure de niveau de liquide NL1, NL2.

Le calculateur 6 peut ainsi consolider les mesures de niveau NL1, NL2 (moyenne, etc.) afin de fournir une information qualitative au système de propulsion de l'aéronef ou au pilote.

De manière optionnelle, il est également déterminé la densité du liquide (ici la densité d'huile). Une telle information est importante étant donné qu'une même turbomachine peut être utilisée avec des huiles de natures différentes. En connaissant le type d'huile, on peut déterminer un paramètre de correction ΔNL1 de la mesure du niveau NL et ainsi améliorer la précision de mesure.

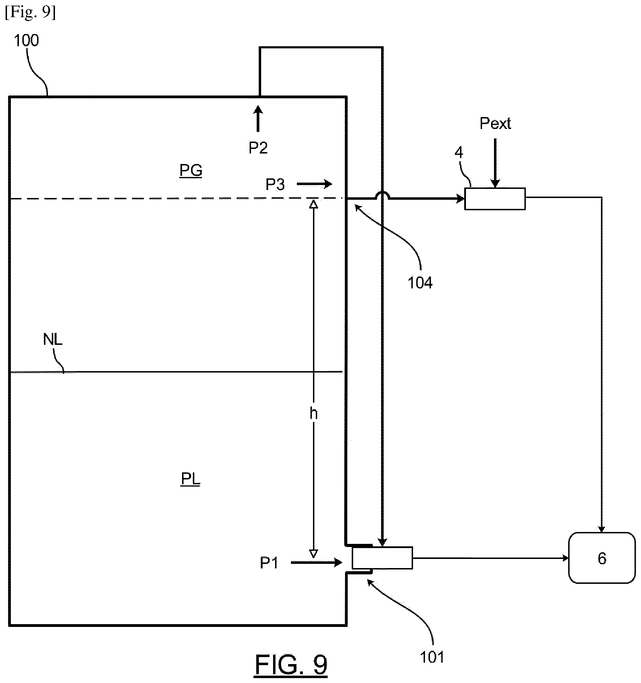

En référence à la [Fig.9], un capteur de pression auxiliaire 4 est mis en communication fluidique avec la phase liquide via une ouverture haute 104 du réservoir 100 et avec le milieu extérieur Mext ayant une pression extérieure Pext afin de réaliser une mesure de pression différentielle qui est fournie au calculateur 6. Etant donné que la distance verticale h entre l'ouverture haute 104 et l'orifice 101 est connue, on peut avantageusement en déduire la densité du liquide ρ par la formule suivante :

[Math.1]
$$\rho = \frac{P_3 - P_2}{g h^* \cos(\alpha)}$$

Avec g la gravité et α l'angle formé entre la verticale de l'aéronef avec l'axe de la pesanteur.

De manière préférée, la mesure de densité ρ est réalisée après remplissage du réservoir 100. La mesure de densité ρ est stockée dans le calculateur 6 et sera utilisée pour déterminer le paramètre de correction ΔNL1 de la mesure du niveau NL. Il va de soi que la mesure de densité ρ pourrait être déterminée de manière plus fréquente.

Il est également possible de corriger le niveau de remplissage NL en fonction de la température. A cet effet, une mesure indépendante de la température du liquide est réalisée et fournie au calculateur 6 et sera utilisée pour déterminer un paramètre de correction ΔNL2 de la mesure du niveau NL.

Ainsi, on obtient une mesure de niveau corrigée NL* selon la formule suivante :

[Math.2]
$$NL^* = NL + \Delta NL1 + \Delta NL2$$

De manière optionnelle, le dispositif de mesure 3 comporte un organe d'amplification, en particulier hydraulique, afin d'augmenter sa sensibilité à la pression de liquide P1 et mesurer de manière précise toute variation. A titre d'exemple, l'organe d'amplification se présente sous la forme d'une tige de piston dont les extrémités ont des sections différentes de manière à amplifier les variations.

De manière optionnelle, le dispositif de fermeture 2 comporte une crépine afin de filtrer les impuretés dans le liquide, en particulier, dans l'organe d'obturation automatique 21.

Procédé d'utilisation

L'invention concerne également un procédé d'utilisation d'un capteur 1 monté dans un orifice de vidange 101 d'un réservoir 100 d'aéronef. Le procédé d'utilisation va être présenté en relation avec la forme de réalisation de la [Fig. 5].

Dans cet exemple de mise en œuvre, en position initiale, seul le dispositif de fermeture 2 est monté dans l'orifice de vidange 101. L'organe d'obturation 21 est actif et évite tout écoulement de liquide. Si une vidange est désirée, un opérateur peut introduire un tuyau dans l'organe d'obturation 21 ou agir sur la manette de commande 22.

Pour réaliser une mesure de niveau de liquide NL, l'opérateur monte le dispositif de mesure 3 sur le dispositif de fermeture 2, ce qui met en communication fluidique l'organe de mesure 30 avec la conduite de liquide 20 qui possède une pression de liquide P1. Comme illustré à la [Fig.5], l'organe de mesure de pression 30 est également en communication fluidique avec la phase gazeuse PG qui possède une pression gazeuse P2. De manière avantageuse, le dispositif de fermeture 2 permet directement cette mise en communication fluidique.

Le procédé comporte une étape de détermination du niveau de liquide NL à partir de la pression de liquide P1 et de la pression gazeuse P2 mesurées par l'organe de mesure 30. Une telle mesure différentielle est robuste.

Grâce à l'intégration du capteur 1 dans un bouchon de vidange, la mesure de niveau de liquide peut être mise en œuvre de manière pratique sur tout type de réservoir 100. La structure en deux parties du capteur 1 permet d'assurer une vidange en cas de besoin tout en facilitant la maintenance étant donné que le dispositif de mesure 3 peut être retiré de manière amovible.

L'invention concerne également un procédé de détection de conditions de fonctionnement à partir du capteur 1 selon l'invention, en particulier, des conditions extrêmes telles qu'une montée/descente rapide de l'aéronef (changement d'altitude brusque).

En effet, lors d'une montée/descente rapide de l'aéronef, le liquide logé dans le réservoir 100 est soumis aux forces d'apesanteur, ce qui modifie les pressions mesurées par le capteur 1.

Selon un exemple de mesure en œuvre, lorsque la différence de pression est nulle, le procédé comporte une étape d'émission d'une alarme qui est fournie avec la mesure de niveau de liquide NL ou la remplace afin d'informer le système de propulsion ou le pilote de l'aéronef que la mesure de niveau de liquide NL n'est pas fiable compte tenu des conditions exceptionnelles. Ainsi, on tire avantage de la mesure différentielle pour vérifier les conditions de fonctionnement et en déduire un indice de pertinence de la mesure de niveau de liquide NL qui est fournie.

**Revendications**

1. Ensemble d'un réservoir d'aéronef (100) et d'un capteur (1) de détermination d'un niveau de liquide (NL) pour un réservoir (100) d'aéronef, le capteur (1) comprenant :

   - un dispositif de fermeture (2), monté dans un orifice (101) du réservoir (100) permettant la circulation de liquide, et un dispositif de mesure (3), monté de manière amovible sur le dispositif de fermeture (2),
   - le dispositif de fermeture (2) comprenant une conduite de liquide (20) configurée pour conduire du liquide issu de l'orifice (100) du réservoir (100) et un organe d'obturation automatique (21) de la conduite de liquide (20) si le dispositif de mesure (3) n'est pas monté sur le dispositif de fermeture (2),

- le dispositif de mesure (3) comprenant au moins un organe de mesure de pression (30) configuré pour mesurer une différence de pression entre, d'une part, une pression de liquide (P1) dans la conduite de liquide (20) et, d'autre part, une pression de référence (P2, Pext) de manière à en déduire le niveau de liquide (NL) dans le réservoir (100),

- le réservoir (100) comprenant une embouchure formée autour de l'orifice (101), l'embouchure comportant au moins une ouverture, en communication fluidique avec une phase gazeuse (PG) du réservoir (100) via une première portion de conduite gazeuse interne (32a') formée dans une épaisseur d'une paroi (102) du réservoir (100), le dispositif de fermeture (2) comportant une deuxième portion de conduite gazeuse interne (32b') configurée pour alimenter l'organe de mesure (30) avec la pression gazeuse (P2) de la phase gazeuse (PG) du réservoir (100) comme pression de référence.

2. Ensemble selon la revendication 1, dans lequel le dispositif de mesure (3) comporte une conduite extérieure (31) débouchant à l'extérieur du réservoir (100) pour mesurer la pression extérieure (Pext) comme pression de référence.

3. Ensemble selon l'une des revendications 1 à 2, dans lequel le dispositif de mesure (3) comprend deux organes de mesure de pression (30a, 30b).

4. Ensemble selon l'une des revendications 1 à 3, dans lequel le réservoir (100) ayant une hauteur minimale de liquide désignée « hauteur d'alerte (HA) », l'orifice (101) est positionné à une hauteur inférieure à ladite hauteur d'alerte (HA).

5. Ensemble selon l'une des revendications 1 à 4, dans lequel l'orifice étant un orifice de vidange (101) du réservoir (100) dans lequel est monté un bouchon de vidange, le capteur (1) est intégré audit bouchon de vidange.

6. Ensemble selon l'une des revendications 1 à 5, comprenant au moins un capteur de pression auxiliaire (4) configuré pour mesurer une pression liquide (P3) à une hauteur déterminée (h) de l'orifice (101) de manière à en déduire une densité de liquide (ρ).

7. Aéronef comportant un ensemble selon l'une des revendications 1 à 6.

8. Procédé d'utilisation d'un ensemble d'un capteur (1) et d'un réservoir (100) d'aéronef selon l'une des revendications 1 à 6, le dispositif de fermeture (2) du capteur (1) étant monté dans l'orifice (101) du réservoir (101), l'organe d'obturation (21) obturant la conduite de liquide (20), le procédé comportant des étapes consistant à :

- Monter le dispositif de mesure (3) sur le dispositif de fermeture (2) de manière à mettre en communication fluidique l'organe de mesure (30) avec la pression de liquide (P1), l'organe d'obturation (21) étant inactivé suite au montage,

- Mesurer une différence de pression entre, d'une part, la pression de liquide (P1) dans la conduite de liquide (20) et, d'autre part, une pression de référence (P2, Pext) de manière à en déduire le niveau de liquide (NL) dans le réservoir (100).

9. Procédé d'utilisation selon la revendication 8, comprenant une étape d'émission d'une alarme lorsque la pression de liquide (P1) est égale à la pression de référence (P2, Pext).

**Patentansprüche**

1. Anordnung aus einem Flugzeugtank (100) und einem Sensor (1) zur Bestimmung eines Flüssigkeitsstands (NL) für einen Tank (100) eines Flugzeugs, wobei der Sensor (1) umfasst:

- eine Verschlussvorrichtung (2), die in einer Öffnung (101) des Tanks (100) angebracht ist, die die Zirkulation von Flüssigkeit ermöglicht, und eine Messvorrichtung (3), die abnehmbar an der Verschlussvorrichtung (2) angebracht ist,

- wobei die Verschlussvorrichtung (2) eine Flüssigkeitsleitung (20), die ausgelegt ist, um Flüssigkeit aus der Öffnung (100) des Tanks (100) zu leiten, und ein Organ (21) zum automatischen Verschließen der Flüssigkeitsleitung (20) umfasst, wenn die Messvorrichtung (3) nicht an der Verschlussvorrichtung (2) angebracht ist,

- wobei die Messvorrichtung (3) mindestens ein Druckmessorgan (30) umfasst, das ausgelegt ist, um eine Druckdifferenz zwischen einerseits einem Flüssigkeitsdruck (P1) in der Flüssigkeitsleitung (20) und andererseits einem Referenzdruck (P2, Pext) zu messen, so dass daraus der Flüssigkeitsstand (NL) im Tank (100) abgeleitet wird,

- wobei der Tank (100) eine um die Öffnung (101) herum gebildete Mündung umfasst, wobei die Mündung mindestens eine Öffnung in Fluidverbindung über einen ersten internen Gasleitungsabschnitt (32a') mit einer Gasphase (PG) des Tanks (100) aufweist, die in einer Dicke einer Wand (102) des Tanks (100) ausgebildet ist, wobei die Verschlussvorrichtung (2) einen zweiten internen Gasleitungsabschnitt (32b') aufweist, der ausgelegt ist, um das Messorgan (30) mit dem Gasdruck (P2) der Gasphase (PG) des Tanks (100) als Referenzdruck zu versorgen.

2. Anordnung nach Anspruch 1, wobei die Messvorrichtung (3) eine äußere Leitung (31) aufweist, die aus dem Tank (100) ausmündet, um den Außendruck (Pext) als Referenzdruck zu messen.

3. Anordnung nach einem der Ansprüche 1 bis 2, wobei die Messvorrichtung (3) zwei Druckmessorgane (30a, 30b) umfasst.

4. Anordnung nach einem der Ansprüche 1 bis 3, wobei der Tank (100) eine als "Alarmhöhe (HA)" bezeichnete Mindestflüssigkeitshöhe aufweist, wobei die Öffnung (101) in einer Höhe unterhalb der Alarmhöhe (HA) positioniert ist.

5. Anordnung nach einem der Ansprüche 1 bis 4, wobei die Öffnung eine Entleerungsöffnung (101) des Tanks (100) ist, in der ein Entleerungsstopfen angebracht ist, wobei der Sensor (1) in den Entleerungsstopfen integriert ist.

6. Anordnung nach einem der Ansprüche 1 bis 6, die mindestens einen Hilfsdrucksensor (4) umfasst, der ausgelegt ist, um einen Flüssigkeitsdruck (P3) in einer bestimmten Höhe (h) der Öffnung (101) zu messen, um daraus eine Flüssigkeitsdichte ($\rho$) abzuleiten.

7. Flugzeug, das eine Anordnung nach einem der Ansprüche 1 bis 6 aufweist.

8. Verfahren zur Verwendung einer Anordnung aus einem Sensor (1) und einem Tank (100) eines Flugzeugs nach einem der Ansprüche 1 bis 6, wobei die Verschlussvorrichtung (2) des Sensors (1) in der Öffnung (101) des Tanks (100) angebracht ist, wobei das Verschlussorgan (21) die Flüssigkeitsleitung (20) verschließt, wobei das Verfahren Schritte umfasst, die darin bestehen:

- Anbringen der Messvorrichtung (3) an der Verschlussvorrichtung (2), so dass das Messorgan (30) in Fluidverbindung mit dem Flüssigkeitsdruck (P1) gebracht wird, wobei das Verschlussorgan (21) nach der Anbringung inaktiviert ist,
- Messen einer Druckdifferenz zwischen dem Flüssigkeitsdruck (P1) in der Flüssigkeitsleitung (20) einerseits und einem Referenzdruck (P2, Pext) andererseits, um daraus den Flüssigkeitsstand (NL) im Tank (100) abzuleiten.

9. Verfahren zur Verwendung nach Anspruch 8, das einen Schritt des Sendens eines Alarms umfasst, wenn der Flüssigkeitsdruck (P1) gleich dem Referenzdruck (P2, Pext) ist.

## Claims

1. Assembly of an aircraft tank (100) and a sensor (1) for determining a liquid level (NL) for an aircraft tank (100), the sensor (1) comprising:

- a closure device (2), mounted in a port (101) of the tank (100) allowing liquid to circulate, and a measuring device (3), removably mounted on the closure device (2),
- the closure device (2) comprising a liquid line (20) configured to conduct liquid from the port (101) of the tank (100) and a member (21) for automatically sealing the liquid line (20) if the measuring device (3) is not mounted on the closure device (2),
- the measuring device (3) comprising at least one pressure measuring member (30) configured to measure a pressure difference between, on the one hand, a liquid pressure (P1) in the liquid line (20) and, on the other hand, a reference pressure (P2, Pext) so as to deduce therefrom the liquid level (NL) in the tank (100),
- the tank (100) comprising a mouthpiece formed around the port (101), the mouthpiece comprising at least one opening, in fluidic communication with a gas phase (PG) of the tank (100) via a first internal gas line portion (32a') formed in a thickness (102) of the tank (100), the closure device (2) comprising a second internal gas line portion (32b') configured to supply the measuring member (30) with the gas pressure (P2) of the gas phase (PG) of the tank (100) as reference pressure.

2. Assembly according to claim 1, wherein the measuring device (3) comprises an external line (31) opening to the outside of the tank (100) to measure the external pressure (Pext) as reference pressure.

3. Assembly according to one of claims 1 to 2, wherein the measuring device (3) comprises two pressure measuring members (30a, 30b).

4. Assembly according to one of claims 1 to 3, wherein the tank (100) having a minimum liquid height designated as "alert height (HA)", the port (101) is positioned at a height lower than said alert height (HA).

**5.** Assembly according to one of claims 1 to 4, wherein the port being a drain port (101) of the tank (100) in which a drain plug is mounted, the sensor (1) is integrated into said drain plug.

**6.** Assembly according to one of claims 1 to 5, comprising at least one auxiliary pressure sensor (4) configured to measure a liquid pressure (P3) at a determined height (h) of the port (101) so as to deduce therefrom a liquid density ($\rho$).

**7.** Aircraft comprising an assembly according to one of claims 1 to 6.

**8.** Method of using an assembly of an aircraft sensor (1) and a tank (100) according to one of claims 1 to 6, the closure device (2) of the sensor (1) being mounted in the port (101) of the tank (100), the sealing member (21) sealing the liquid line (20), the method comprising steps consisting of:

- Mounting the measuring device (3) on the closing device (2) so as to place the measuring member (30) in fluidic communication with the liquid pressure (P1), the sealing member (21) being inactivated following the mounting,
- Measuring a pressure difference between, on the one hand, the liquid pressure (P1) in the liquid line (20) and, on the other hand, a reference pressure (P2, Pext) so as to deduce therefrom the liquid level (NL) in the tank (100).

**9.** Method of use according to claim 8, comprising a step of emitting an alarm when the liquid pressure (P1) is equal to the reference pressure (P2, Pext).

[Fig. 1]

FIG. 1

[Fig. 2]

FIG. 2

[Fig. 3]

FIG. 3

[Fig. 4]

FIG. 4

[Fig. 5]

104

PG

P2→

NL

PL

32'

32a'    32b'

Mext

102

P1→

30

6

20    21

101

2    3

1

## FIG. 5

[Fig. 6]

FIG. 6

[Fig. 7]

FIG. 7

[Fig. 8]

FIG. 8

[Fig. 9]

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* EP 2700913 A1